(19)

**Europäisches Patentamt**
**European Patent Office**
**Office européen des brevets**

(11)    **EP 4 526 722 B1**

(12)                        **EUROPEAN PATENT SPECIFICATION**

(45) Date of publication and mention
of the grant of the patent:
**05.08.2026   Bulletin 2026/32**

(21) Application number: **23721973.8**

(22) Date of filing: **27.04.2023**

(51) International Patent Classification (IPC):
***G02B 27/01*** *(2006.01)*

(52) Cooperative Patent Classification (CPC):
**G02B 27/0172; G02B 27/0101; G02B 2027/0123**

(86) International application number:
**PCT/FI2023/050230**

(87) International publication number:
**WO 2023/222943 (23.11.2023 Gazette 2023/47)**

(54) **DISPLAY STRUCTURE, DISPLAY DEVICE, AND VEHICLE**

ANZEIGESTRUKTUR, ANZEIGEVORRICHTUNG UND FAHRZEUG

STRUCTURE D'AFFICHAGE, DISPOSITIF D'AFFICHAGE ET VEHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **16.05.2022   FI 20225429**

(43) Date of publication of application:
**26.03.2025   Bulletin 2025/13**

(73) Proprietor: **Dispelix Oy**
**02130 Espoo (FI)**

(72) Inventor: **MALKAMÄKI, Aapo**
**02130 Espoo (FI)**

(74) Representative: **Giraldi, Elisa et al**
**Notarbartolo & Gervasi S.p.A.**
**Viale Achille Papa, 30**
**20149 Milano (IT)**

(56) References cited:
**WO-A1-2021/144452**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF TECHNOLOGY

This disclosure concerns waveguide-based display structures, display devices comprising such display structures, and vehicles comprising such display devices.

### BACKGROUND

Generally, a small form factor is essential for various portable displays and for vehicular displays. Displays with reduced form factors may be realized by utilization of waveguide-based structures for guiding light from the optical engines of such displays towards the users' eye(s). Additionally, the sizes and masses of display devices may be further decreased by utilization of laser light sources in optical engines.

Since the images produced by typical optical engines are relatively small, exit-pupil-expansion methods based on pupil replication are commonly used to increase the sizes of output images in conventional waveguide-based displays. In conventional exit-pupil-expansion methods, a light beam is coupled into a waveguide such that it propagates towards a first direction through an exit pupil expansion structure, e.g., a diffraction grating or a succession of beam splitters, and the exit pupil expansion structure forms a plurality of light beams propagating towards a second direction perpendicular to the first direction. Light from such a plurality of light beams is then coupled out of the waveguide using an out-coupling structure, e.g., an out-coupling grating, to form an output image.

Although such conventional methods have been successfully utilized for generation of various portable and vehicular displays, brightness non-uniformities may ensue in case light from the exit pupil expansion structure is divided unevenly throughout the extent of the out-coupling structure. Additionally, due to the relatively high temporal coherence of laser light sources, pupil replication may cause disturbances in image quality if replicated beams of light interfere with each other when arriving at the same location via multiple mutually similar propagation paths.

Considering the above, it may be desirable to develop novel solutions related to display devices.

WO2021/144452 A1 discloses a display comprising a waveguide, a diffractive in-coupler, a diffractive first exit pupil expander, a diffractive second exit pupil expander and a diffractive out-coupler.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. According to a first aspect, a display structure is provided. The display structure comprises a waveguide; an in-coupling structure configured to couple a set of input beams into the waveguide as a set of in-coupled beams associated with a set of in-coupled k-vectors defining a first domain in k-space in an annular guided propagation domain associated with the waveguide, the first domain defining a first light guiding direction; and a diffractive primary exit pupil expansion structure configured to receive the set of in-coupled beams and to diffract the set of in-coupled beams to form a first set of guided beams and a second set of guided beams associated with a first set of k-vectors and a second set of k-vectors, respectively, lying in the first domain and in a second domain defining a second light guiding direction different from the first light guiding direction. The display structure further comprises a diffractive secondary exit pupil expansion structure configured to receive from the primary exit pupil expansion structure a set of transition beams associated with a set of transition k-vectors lying in one of the first domain and the second domain and to diffract the set of transition beams to form a first secondary set of guided beams and a second secondary set of guided beams associated with a first secondary set of k-vectors and a second secondary set of k-vectors, respectively, lying in the second domain and in a third domain defining a third light guiding direction different from each of the first light guiding direction and the second light guiding direction, respectively; and an out-coupling structure arranged towards the second light guiding direction from the primary exit pupil expansion structure and from the secondary exit pupil expansion structure and configured to couple light associated with k-vectors lying in the second domain out of the waveguide.

According to a second aspect, a display device comprising a display structure in accordance with the first aspect is provided.

According to a third aspect, a vehicle comprising a vehicular display device in accordance with the second aspect is provided.

### BRIEF DESCRIPTION OF THE DRAWINGS

The present disclosure will be better understood from the following detailed description read in light of the accompanying drawings, wherein:

> **FIG. 1** shows partial orthographic top view of a display structure,
> **FIG. 2** depicts a normalized k-vector diagram,
> **FIG. 3** illustrates a plurality of k-vector diagrams,
> **FIG. 4** depicts a display device, and
> **FIG. 5** shows a vehicle.

Unless specifically stated to the contrary, any drawing of the aforementioned drawings may be not drawn to scale such that any element in said drawing may be drawn with inaccurate proportions with respect to other elements in said drawing in order to emphasize certain structural aspects of the embodiment of said drawing.

Moreover, corresponding elements in the embodiments of any two drawings of the aforementioned drawings may be disproportionate to each other in said two drawings in order to emphasize certain structural aspects of the embodiments of said two drawings.

Further, any vector extending from a specific first point to a specific second point in any drawing of the aforementioned drawings may be drawn with inaccurate starting and/or ending points in order to increase clarity and comprehensibility of said drawing.

## DETAILED DESCRIPTION

Concerning display structures and display devices discussed in this detailed description, the following shall be noted.

In this specification, a "display device" may refer to an operable output device, e.g., electronic device, for visual presentation of images. A display device may generally comprise any part(s) or element(s) beneficial for visual presentation of images, for example, a power unit; an optical engine; a combiner optics unit, such as a waveguide-based combiner optics unit; an eye tracking unit; a head tracking unit; a gesture sensing unit; and/or a depth mapping unit. A display device may or may not be implemented as a see-through display device and/or as a portable display device and/or a vehicular display device. Herein, a "see-through display device" or "transparent display device" refers to a display device allowing its user to see the images shown on the display device as well as to see through the display device.

Herein, a "portable display device" refers to a display device configured to be easily transportable and/or configured to be carried and/or worn.

Further, a "vehicular display device" refers to a display device configured for use in a vehicle, for example, while operating said vehicle. Additionally a vehicular display device may refer tc a display device configured to present images and/or data associated with a vehicle and/or operation thereof. Generally, a vehicular display device is implemented as a vehicle-mounted display device fixed to a vehicle.

Throughout this specification, a "k-vector", or "wave vector" refers to a vector in k-space. Additionally, a k-vector may represent an optical beam, i.e., a ray of light, with a specific propagation direction. Generally, a k-vector associated with an optical beam propagating in a medium has a magnitude defined by an (angular) wavenumber defined as

$$\mathrm{k} = n\frac{2\pi}{\lambda_o}$$, wherein n is the refractive index of the medium and $\lambda_0$ is the wavelength of the optical beam in vacuum.

As is evident based on the equation above, optical beams with shorter wavelengths have k-vectors with higher magnitudes. Additionally, a k-vector points in the propagation direction of the optical beam that it represents. In light of the above, a k-vector (k) is defined as $\mathbf{k} = k\hat{\mathbf{v}}$, wherein k is the wavenumber of the optical beam and $\hat{\mathbf{v}}$ is a unit vector pointing in the propagation direction of the optical beam.

Herein, "k-space", or "angular space", refers to a framework, wherein spatial frequency space analysis is used to relate k-vectors to geometrical points. Additionally or alternatively, k-space may refer to a two-dimensional projected space associated with a waveguide. In k-space, any diffraction event occurring while light propagates in a waveguide can be represented as a translation. Using the k-space formalism, the operation of a display structure may be described by the manner in which said display structure causes a set of input k-vectors to move in k-space.

Generally, in an unbounded homogeneous medium, all propagation directions are permitted, and the magnitudes of all k-vectors of a given wavelength are the same. As such, permitted k-vectors of a given wavelength in an unbounded homogeneous medium define a hollow sphere in k-space with a radius defined by the common wavenumber of the k-vectors. Since the common wavenumber of the k-vectors is proportional to the refractive index of the medium, the radius of the hollow sphere is also proportional to the refractive index of the medium.

However, in a homogeneous waveguide extending along a plane, permitted k-vectors of a given wavelength are commonly represented by a solid disk with a radius defined by the common wavenumber of the k-vectors. Such representation may be viewed as a projection of the previously described hollow sphere onto a plane in k-space corresponding to the plane along which the waveguide extends. Every point within the boundary of the solid disk corresponds to two permitted k-vectors having components perpendicular to the plane opposite to one another. For example, in case of a homogeneous waveguide extending along the x-y plane, the out-of-plane component of $k_z$ of a k-vector with a wavenumber k is given by $k_z = \pm \sqrt{k^2 - k_x^2 - k_y^2}$ , wherein $k_x$ and $k_y$ are the magnitudes of the x- and y-components of the k-vector, respectively. Similarly to the case in unbounded homogeneous medium, the radius of the solid disk is proportional to the refractive index of the waveguide.

Typically, not all k-vectors permitted in a waveguide are guided in the waveguide. A waveguide is commonly surrounded by a medium having a refractive index less than that of the waveguide. Generally, a separate solid disk may be defined to represent permitted k-vectors in such medium. Since the refractive index of the surrounding medium is less than that of the waveguide, the solid disk associated with the surrounding medium has a radius less than that of the solid disk associated with the waveguide.

In general, an annular domain in k-space defined by the relative complement of such smaller solid disk in such larger solid disk, i.e., the difference of the larger solid disk and the smaller solid disk, is referred to as a "guided propagation domain" associated with a waveguide. All k-vectors with in-plane components lying within such guided propagation domain of a waveguide may propagate in said waveguide in guided manner.

As stated above, the smaller solid disk represents permitted k-vectors in a medium surrounding a waveguide. Since light to be coupled into or out of a waveguide must be able to propagate in such surrounding medium, only k-vectors with in-plane components lying within such smaller solid disk may be coupled into or out of a waveguide. Consequently, the smaller solid disk representing permitted k-vectors in a medium surrounding a waveguide may be referred to as a "coupling domain" associated with said waveguide.

In light of the above, k-vectors permitted in a waveguide can be depicted in k-space using a two-dimensional k-vector diagram. Herein, a "k-vector diagram" may refer to a depiction of k-space, wherein guided propagation angles for optical beams propagating in a waveguide are represented by an annular guided propagation domain associated with said waveguide. Additionally or alternatively, a k-vector diagram may refer to a depiction of k-space, wherein non-guided propagation angles of optical beams propagating in a waveguide are represented by a coupling domain associated with said waveguide.

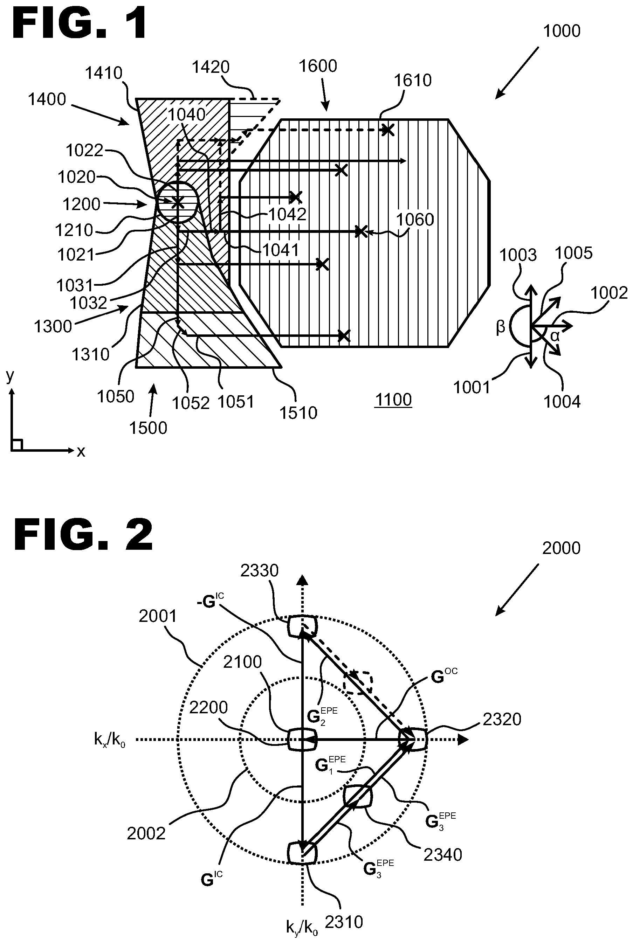

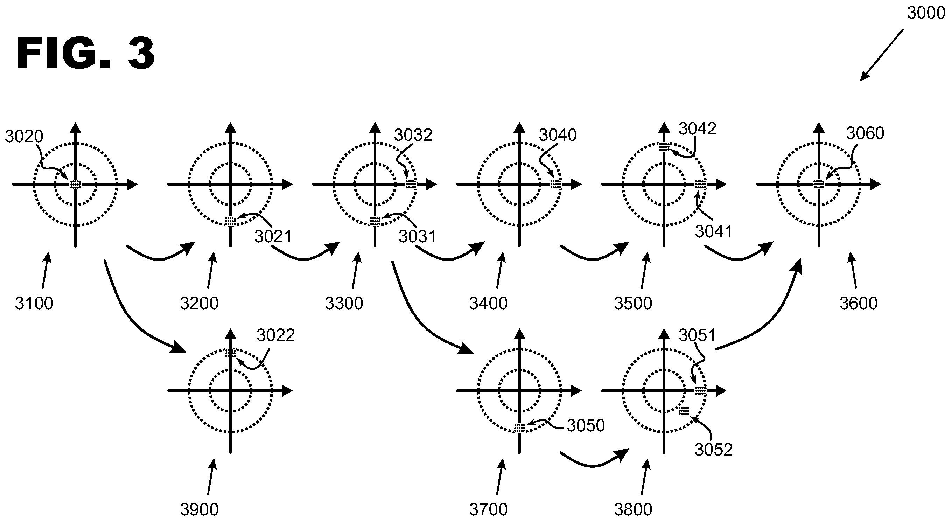

Generally, the outer radius of a guided propagation domain may be inversely proportional to wavelength of light such that light of lower wavelength may be associated with a wider guided propagation domain. Although the width of a guided propagation domain may influence the range of k-vectors that may be guided in a waveguide, a non-dispersive waveguide may still not be generally able to support a wider field of view with lower wavelengths. This may be due to the angular extent of a field of view being inversely proportional to wavelength. In light of this, k-vector diagrams are typically normalized such that a solid disk associated with propagation in vacuum is depicted with unity radius, i.e., the plots are normalized by dividing each k-vector by its wavenumber in vacuum ($k_o$), i.e., by $k_0 = \frac{2\pi}{\lambda_o}$ . FIG. 1 depicts a partial orthographic top view of a display structure 1000 according to an embodiment, FIG. 2 shows a normalized k-vector diagram 2000 illustrating the operating principles of the display structure 1000, and FIG. 3 depicts a plurality of k-vector diagrams 3000 for further illustrating the effect of various diffraction events related to the operation of the display structure 1000.

In the embodiment of FIGs. 1 to 3, the display structure 1000 comprises a waveguide 1100. In FIG. 1, the waveguide 1100 extends parallel to the plane of the drawing.

In this disclosure, a "waveguide" may refer to an optical waveguide. Additionally or alternatively, a waveguide may refer to a two-dimensional waveguide, wherein light may be confined along a thickness direction of said waveguide. Additionally or alternatively, a waveguide may refer to a two-dimensional waveguide, wherein light may be confined between opposite faces of said waveguide by total internal reflection.

In the embodiment of FIGs. 1 to 3, the display structure 1000 comprises an in-coupling structure 1200. Throughout this disclosure, an "in-coupling structure" refers to a structure configured to couple a set of input beams into a waveguide for guided propagation therein. Generally, an in-coupling structure may comprise, for example, one or more diffractive optical elements, such as diffraction gratings; and/or one or more reflective optical elements, such as mirrors; and/or one or more refractive optical elements, such as prisms.

In the embodiment of FIGs. 1 to 3, the waveguide 1100 may have a refractive index of approximately 2 throughout the visible spectrum. In other embodiments, a waveguide may have any suitable refractive index with any suitable dispersive properties.

The waveguide 1100 of the embodiment of FIGs. 1 to 3 may be surrounded by air with a refractive index of approximately 1 throughout the visible spectrum. Consequently, light may be guided within the waveguide 1100 between opposite air-glass interfaces. In other embodiments, light may be guided within a waveguide between any suitable interfaces, for example, air-glass interfaces.

As schematically depicted in FIG. 1, the in-coupling structure 1200 of the embodiment of FIGs. 1 to 3 is configured to couple a set of input beams 1020 into the waveguide 1100 as a set of in-coupled beams 1021.

Herein, a "set of input beams" may refer to a set of optical beams directed to an in-coupling structure and corresponding to an input image. Additionally or alternatively, a set of input beams may refer to a set of optical beams propagating towards an in-coupling structure of a display structure from a solid angle defining a field of view of said display structure. Additionally of alternatively, a set of input beams may refer to a set of optical beams associated with a set of input k-vectors lying in a coupling domain associated with a waveguide.

Further, a "set of in-coupled beams" may refer to a set of optical beams coupled into a waveguide by an in-coupling structure. Additionally or alternatively, a set of in-coupled beams may refer to a set of optical beams corresponding to an image and propagating in guided manner within a waveguide. Additionally of alternatively, a set of in-coupled beams may refer to a set of optical beams associated with a set of in-coupled k-vectors lying in a guided propagation domain associated with a waveguide.

The set of input beams 1020 and the set of in-coupled beams 1021 of the embodiment of FIGs. 1 to 3 are associated with a set of input k-vectors 3020 and a set of in-coupled k-vectors 3021, respectively.

In the plurality of k-vector diagrams 3000 of FIG. 3, the set of input k-vectors 3020 is schematically illustrated as a set of points in the first k-vector diagram 3100, the set of in-coupled k-vectors 3021 is schematically illustrated as a set of points in the second k-vector diagram 3200, and the coupling of the set of input beams 1020 into the waveguide 1100 as the set of in-coupled beams 1021 is represented schematically as an arrow extending from the first k-vector diagram 3100 to the second k-vector diagram 3200.

As is evident based on FIGs. 2 and 3, the set of input k-vectors 3020 and the set of in-coupled k-vectors 3021 lie in an in-coupling domain 2100 and in a first domain 2310, respectively. The first domain 2310 is situated in an annular guided propagation domain 2001 associated with the waveguide 1100, whereas the in-coupling domain 2100 lies in a coupling domain 2002 surrounded by the guided propagation domain 2001.

Herein, a "first domain" refers to a domain in k-space situated within a guided propagation domain associated with a waveguide. Additionally or alternatively, a first domain may refer to a domain in k-space defined by a set of in-coupled k-vectors coupled into a waveguide by an in-coupling structure. Herein, "a domain in k-space defined by a set of in-coupled k-vectors" may refer to a smallest non-empty connected open set within a guided propagation domain associated with a waveguide comprising each of the points representing said set of in-coupled k-vectors.

In the embodiment of FIGs. 1 to 3, the in-coupling domain 2100 is arranged centrally in the coupling domain 2002. In other embodiments, an in-coupling domain may be arranged in a coupling domain in any suitable manner, for example, centrally or off-centrally.

In the embodiment of FIGs. 1 to 3, the display structure 1000 further comprises a diffractive primary exit pupil expansion structure 1300.

In this specification, a structure being "diffractive" may refer to said structure comprising a diffractive optical element. Herein, a "diffractive optical element", refers to an optical element the operation of which is based on diffraction of light. Generally, a diffractive optical element may comprise structural features with at least one dimension of the order of the wavelengths of visible light, for example, at least one dimension less than one micrometer. Typical examples of diffractive optical elements include diffraction gratings, e.g., one- and two-dimensional diffraction gratings, which may be implemented as single-region diffraction gratings or as multi-region diffraction gratings. Diffraction gratings may generally be implemented, at least, as surface relief diffraction gratings or volume holographic diffraction gratings, and they may be configured to function as transmission- and/or reflection-type diffraction gratings.

Further, "exit pupil expansion", or "EPE", refers to a process of distributing light within a waveguide in a controlled manner to expand the portion of said waveguide wherefrom out-coupling of light occurs. Generally, exit pupil expansion may be accomplished in waveguide-based display structures using so-called "pupil replication" schemes, wherein a plurality of exit sub-pupils are formed in an imaging system. Consequently, an "exit pupil expansion structure" may refer to a structure suitable or configured for exit pupil expansion, for example, by pupil replication.

As schematically depicted in FIG. 1, the primary exit pupil expansion structure 1300 of the embodiment of FIGs. 1 to 3 is configured to receive the set of in-coupled beams 1021 and to diffract the set of in-coupled beams 1021 to form a first set of guided beams 1031 and a second set of guided beams 1032.

In the embodiment of FIGs. 1 to 3, the first set of guided beams 1031 is associated with a first set of k-vectors 3031, and the second set of guided beams 1032 is associated with a second set of k-vectors 3032. In the plurality of k-vector diagrams 3000 of FIG. 3, the first set of k-vectors 3031 and the second set of k-vectors 3032 are depicted as sets of points in a third k-vector diagram 3300, and the diffraction of the set of in-coupled beams 1021 by the primary exit pupil expansion structure 1300 to form the first set of guided beams 1031 and the second set of guided beams 1032 is represented schematically as an arrow extending from the second k-vector diagram 3200 to the third k-vector diagram 3300. As shown in FIGs. 2 and 3, the first set of k-vectors 3031 lies in the first domain 2310, and the second set of k-vectors 3032 lies in a second domain 2320.

In the embodiment of FIGs. 1 to 3, the first domain 2310 defines a first light guiding direction 1001, and the second domain 2320 defines a second light guiding direction 1002 different from the first light guiding direction 1001.

Herein, a domain in k-space situated within a guided propagation domain associated with a waveguide "defining a light guiding direction" may refer to said waveguide extending laterally along a plane and said domain comprising a characteristic point, e.g., centroid of said domain, defining said light guiding direction along said plane.

In the embodiment of FIGs. 1 to 3, the display structure 1000 further comprises a diffractive secondary exit pupil expansion structure 1400.

As schematically depicted in FIG. 1, the secondary exit pupil expansion structure 1400 of the embodiment of FIGs. 1 to 3 is configured to receive from the primary exit pupil expansion structure 1300 a set of transition beams 1040 and to diffract the set of transition beams 1040 to form a first secondary set of guided beams 1041 and a second secondary set of guided beams 1042.

In the embodiment of FIGs. 1 to 3, the set of transition beams 1040 is associated with a set of transition k-vectors 3040, the first secondary set of guided beams 1041 is associated with a first secondary set of k-vectors 3041, and the second secondary set of guided beams 1042 is associated with a second secondary set of k-vectors 3042.

In the plurality of k-vector diagrams 3000 of FIG. 3, the set of transition k-vectors 3040 is depicted as a set of points in a fourth k-vector diagram 3400, and the first secondary set of k-vectors 3041 and the second secondary set of k-vectors 3042 are depicted as sets of points in a fifth k-vector diagram 3500. The diffraction of the set of transition beams 1040 by the secondary exit pupil expansion structure 1400 to form the first secondary set of guided beams 1041 and the second secondary set of guided beams 1042 is represented schematically as an arrow extending from the fourth k-vector diagram 3400 to the fifth k-vector diagram 3500. As shown in FIGs. 2 and 3, the set of transition k-vectors 3040 lies in the second domain 2320, the first secondary set of k-vectors 3041 lies in the second domain 2320, and the second secondary set of k-vectors 3042 lies in a third domain 2330 defining a third light guiding direction 1003 different from each of the first light guiding direction 1001 and the second light guiding direction 1002.

The display structure 1000 of the embodiment of FIGs. 1 to 3 further comprises a diffractive out-coupling structure 1600.

In this disclosure, an "out-coupling structure" refers to a structure configured to couple light out of a waveguide.

The out-coupling structure 1600 of the embodiment of FIGs. 1 to 3 is arranged towards the second light guiding direction 1002 from the primary exit pupil expansion structure 1300 and from the secondary exit pupil expansion structure 1400 and the out-coupling structure 1600 is configured to couple light associated with k-vectors lying in the second domain 2320 out of the waveguide 1100.

According to the invention, the display structure comprises a diffractive secondary exit pupil expansion structure configured to receive from a primary exit pupil expansion structure a set of transition beams associated with a set of transition k-vectors lying in one of a first domain and a second domain and to diffract the set of transition beams to form a first secondary set of guided beams and a second secondary set of guided beams associated with a first secondary set of k-vectors and a second secondary set of k-vectors, respectively, lying in the second domain and in a third domain defining a third light guiding direction different from each of a first light guiding direction and a second light guiding direction, respectively; and an out-coupling structure arranged towards the second light guiding direction from the primary exit pupil expansion structure and from the secondary exit pupil expansion structure and configured to couple light associated with k-vectors lying in the second domain out of the waveguide. Generally, a display structure comprising such a secondary exit pupil expansion structure and such an out-coupling structure may facilitate coupling light originating from a set of input beams more evenly out of a waveguide and/or enable reducing so-called "EPE interference", i.e., undesirable changes of image brightness across an image displayed by a display structure, which is caused by interference of replicated optical beams guided via different paths to the same position at an out-coupling structure.

In the embodiment of FIGs. 1 to 3, the first domain 2310, the second domain 2320, and the third domain 2330 are mutually disjoint. In other embodiments, a first domain, a second domain, and a third domain may be arranged in k-space in an annular guided propagation domain associated with a waveguide in any suitable manner, for example, such that they are mutually disjoint.

In the embodiment of FIGs. 1 to 3, the third domain 2330 defines a third light guiding direction 1003, and the secondary exit pupil expansion structure 1400 is arranged such that light guided from the secondary exit pupil expansion structure 1400 towards either of the second light guiding direction 1002 and the third light guiding direction 1003 propagates past the primary exit pupil expansion structure 1300. Generally, a secondary exit pupil expansion structure being arranged such that light guided from the secondary exit pupil expansion structure towards either of a second light guiding direction and a third light guiding direction propagates past a primary exit pupil expansion structure may reduce leakage of light out of a waveguide resulting from unintended diffraction of light returning from the secondary exit pupil expansion structure to the primary exit pupil expansion structure. In other embodiments, a secondary exit pupil expansion structure may or may not be arranged in such manner. For example, in some embodiments, leakage of light may be reduced by utilization of beam blocking elements.

In the embodiment of FIGs. 1 to 3, a smallest angle ($\alpha$) between the first light guiding direction 1001 and the second light guiding direction 1002 is approximately 90°. Generally, a smallest angle between a first light guiding direction and a second light guiding direction being greater than or equal to 55°, or to 65°, or to 75°, or to 85° and/or less than or equal to 95°, or to 105°, or to 115°, or to 125° may facilitate arranging a diffractive primary exit pupil expansion structure, a diffractive secondary exit pupil expansion structure, and an out-coupling structure in a more compact manner, i.e., with reduced footprint. In other embodiments, any suitable smallest angle between a first light guiding direction and a second light guiding direction, for example, a smallest angle greater than or equal to 55°, or to 65°, or to 75°, or to 85° and/or less than or equal to 95°, or to 105°, or to 115°, or to 125°, may be used.

In the embodiment of FIGs. 1 to 3, a smallest angle ($\beta$) between the first light guiding direction 1001 and the third light guiding direction 1003 is approximately 180°. Generally, a smallest angle between a first light guiding direction and a third light guiding direction being greater than or equal to 155°, or to 165°, or to 175° may facilitate increasing an optical path length difference between corresponding optical beams travelling to an out-coupling structure via different paths, which may, in turn, reduce EPE interference, with limited increase in footprint of exit pupil expansion structures and the out-coupling structure.

In the normalized k-vector diagram 2000 of FIG. 2, the diffraction of the set of in-coupled beams 1021 by the primary exit pupil expansion structure 1300 is represented as a fundamental primary exit-pupil-expansion grating k-vector ($\mathbf{G}_1^{\mathrm{EPE}}$) extending from a center of the first domain 2310 to a center of the second domain 2320. As such, the primary exit pupil expansion structure 1300 is configured to diffract the set of in-coupled beams 1021 by zeroth-order diffraction to form the first set of guided beams 1031 and by first-order diffraction ($\mathbf{G}_1^{\mathrm{EPE}}$) to form the second set of guided beams 1032. Generally, a primary exit pupil expansion structure being configured to diffract a set of in-coupled beams by zeroth-order and first-order diffractions to form a first set of guided beams and a second set of guided beams may facilitate reducing optical losses related to exit pupil expansion. In other embodiments, a primary exit pupil expansion structure may or may not be configured to diffract a set of in-coupled beams by zeroth-order and first-order diffractions to form a first set of guided beams and a second set of guided beams, respectively.

Herein, a "grating k-vector" may refer to a vector in k-space representing the effect of a diffractive optical element on the propagation direction of an optical beam represented by a k-vector. Additionally or alternatively, a grating k-vector associated with a diffractive optical element may refer to a vector in k-space that may be added to an in-plane component of a k-vector associated with an optical beam in order to represent the effect of said diffractive optical element on the propagation of said optical beam.

Generally, diffractive optical elements may be utilized for coupling optical beams into and/or out of a waveguide and/or for altering the propagation direction of said optical beams within said waveguide. The magnitudes and directions of a grating k-vector representing the effect of a diffractive optical element are determined by the properties of said diffractive optical element. In particular, a fundamental grating vector may be associated with each periodicity direction of a diffractive optical element, the direction and magnitude of each fundamental grating vector being determined by the direction and pitch of said diffractive optical element in its associated periodicity direction. Higher order grating vectors of a diffractive optical element may then be expressed as integer linear combinations of the fundamental grating vectors of a diffractive optical element. For example, assuming that a diffractive optical element has a first periodicity in a first direction and a second periodicity in a second direction, a first fundamental grating vector $\mathbf{G}_1$ and a second fundamental grating vector $\mathbf{G}_2$ may be associated with the first direction and the second direction, and higher order grating vectors, such as $\mathbf{G}_1+\mathbf{G}_2$, $\mathbf{G}_1-\mathbf{G}_2$, $-2\mathbf{G}_1$, and $3\mathbf{G}_2$, may be defined based on the fundamental grating vectors.

Throughout this specification, "Nth-order diffraction", e.g., first-order diffraction or second-order diffraction, may refer to positive Nth-order diffraction and/or negative Nth-order diffraction. Additionally or alternatively, a structure being configured to "diffract a set of beams by Nth-order diffraction" may refer to said structure being configured to diffract said set of beams in a manner representable by a grating k-vector $\pm N\mathbf{G}^f$, wherein $\mathbf{G}^f$ is a fundamental grating k-vector of a diffractive optical element of said structure.

In the normalized k-vector diagram 2000 of FIG. 2, the diffraction of the set of transition beams 1040 by the secondary exit pupil expansion structure 1400 is represented as a fundamental secondary exit-pupil-expansion grating k-vector ($\mathbf{G}_2^{\mathrm{EPE}}$) extending from the center of the second domain 2320 to a center of the third domain 2330. As such, the secondary exit pupil expansion structure 1400 is configured to diffract the set of transition beams 1040 by zeroth-order diffraction to form the first secondary set of guided beams 1041 and by first-order diffraction ($\mathbf{G}_2^{\mathrm{EPE}}$) to form the second secondary set of guided beams 1042. Generally, a secondary exit pupil expansion structure being configured to diffract a set of transition beams by zeroth-order and first-order diffractions to form a first secondary set of guided beams and a second secondary set of guided beams, respectively, may facilitate reducing optical losses related to exit pupil expansion. In other embodiments, a secondary exit pupil expansion structure may or may not be configured in such a manner.

The secondary exit pupil expansion structure 1400 is further configured to diffract the second secondary set of guided beams 1042 by first-order diffraction ($-\mathbf{G}_2^{\mathrm{EPE}}$) to direct light from the second secondary set of guided beams 1042 towards the second light guiding direction 1002 and the out-coupling structure 1600. In other embodiments, a secondary exit pupil expansion structure may be configured to diffract a second secondary set of guided beams to direct light therefrom towards an out-coupling structure in any suitable manner(s), for example, by first-order diffraction.

In the embodiment of FIGs. 1 to 3, the primary exit pupil expansion structure 1300 comprises a one-dimensional primary exit pupil expansion grating 1310 for forming the first set of guided beams 1031 and the second set of guided beams 1032, and the secondary exit pupil expansion structure 1400 comprises a one-dimensional secondary exit pupil expansion grating 1410 for forming the first secondary set of guided beams 1041 and the second secondary set of guided beams 1042. In other embodiments, a primary exit pupil expansion structure may comprise a one-dimensional primary exit pupil expansion grating for forming a first set of guided beams and a second set of guided beams, and/or a secondary exit pupil expansion structure may comprise a one-dimensional secondary exit pupil expansion grating for forming a first secondary set of guided beams and a second secondary set of guided beams. Generally, a primary exit pupil expansion structure comprising such a one-dimensional primary exit pupil expansion grating and/or a secondary exit pupil expansion structure comprising such a one-dimensional secondary exit pupil expansion grating may facilitate fabricating a display structure.

In the embodiment of FIGs. 1 to 3, the out-coupling structure 1600 is configured to couple light out of the waveguide 1100 as a set of output beams 1060 associated with a set of output k-vectors 3060. In other embodiments, an out-coupling structure may be configured to couple light out of a waveguide in any suitable manner(s), for example, as such a set of output beams.

In the plurality of k-vector diagrams 3000 of FIG. 3, the set of output k-vectors 3060 is depicted as a set of points in a sixth k-vector diagram 3600, and the coupling of light out of the waveguide 1100 is represented by curved arrows extending to the sixth k-vector diagram 3600. As is evident based on FIGs. 2 and 3, the set of output k-vectors 3060 lies in an out-coupling domain 2200, which is situated inside the coupling domain 2002.

In the embodiment of FIGs. 1 to 3, the out-coupling domain 2200 is arranged centrally in the coupling domain 2002. In other embodiments, an out-coupling domain may be arranged in a coupling domain in any suitable manner, for example, centrally or off-centrally. In some embodiments, an out-coupling domain may be aligned with an in-coupling domain.

In the normalized k-vector diagram 2000 of FIG. 2, the coupling of light associated with k-vectors lying in the second domain 2320 out of the waveguide 1100 is represented as a fundamental out-coupling grating k-vector ($\mathbf{G}_{OC}$) extending from the center of the second domain 2320 to a center of the out-coupling domain 2200. As such, the out-coupling structure 1600 is configured to diffract light associated with k-vectors lying in the second domain 2320 out of the waveguide 1100 by first-order diffraction ($\mathbf{G}_{OC}$). In other embodiments, an out-coupling structure may or may not be configured to diffract light associated with k-vectors lying in the second domain out of the waveguide by first-order diffraction.

In the embodiment of FIGs. 1 to 3, the out-coupling structure 1600 comprises a one-dimensional out-coupling grating 1610 for coupling light from the first secondary set of guided beams 1041 out of the waveguide 1100. Generally, an out-coupling structure comprising a one-dimensional out-coupling grating may facilitate fabricating a display structure. In other embodiments, an out-coupling structure may or may not comprise a one-dimensional out-coupling grating for coupling light from a first secondary set of guided beams out of a waveguide. In some embodiments, an out-coupling structure may or may not comprise a two-dimensional out-coupling grating for such purpose in addition or as an alternative to a one-dimensional out-coupling grating.

The display structure 1000 of the embodiment of FIGs. 1 to 3 further comprises a diffractive tertiary exit pupil expansion structure 1500, which is configured to receive from the primary exit pupil expansion structure 1300 a further set of transition beams 1050 and to diffract the further set of transition beams 1050 to form a first tertiary set of guided beams 1051 and a second tertiary set of guided beams 1052, and the out-coupling structure 1600 is arranged towards the second light guiding direction 1002 from the tertiary exit pupil expansion structure 1500.

In the embodiment of FIGs. 1 to 3, the further set of transition beams 1050 is associated with a further set of transition k-vectors 3050, the first tertiary set of guided beams 1051 is associated with a first tertiary set of k-vectors 3051, and the second tertiary set of guided beams 1052 is associated with a second tertiary set of k-vectors 3052.

In the plurality of k-vector diagrams 3000 of FIG. 3, the further set of transition k-vectors 3050 is depicted as a set of points in a seventh k-vector diagram 3700, and first tertiary set of k-vectors 3051 and the second tertiary set of k-vectors 3052 are depicted as sets of points in an eight k-vector diagram 3800.

The diffraction of the further set of transition beams 1050 by the tertiary exit pupil expansion structure 1500 to form the first tertiary set of guided beams 1051 and the second tertiary set of guided beams 1052 is represented schematically as an arrow extending from the seventh k-vector diagram 3700 to the eight k-vector diagram 3800. As shown in FIGs. 2 and 3, the further set of transition k-vectors 3050 lies in the first domain 2310, the first tertiary set of k-vectors 3051 lies in the second domain 2320, and the second tertiary set of k-vectors 3052 lies in a fourth domain 2340 defining a fourth light guiding direction 1004 different from each of the first light guiding direction 1001 and the second light guiding direction 1002.

In other embodiments, a display structure may or may not comprise a tertiary exit pupil expansion structure configured to receive from a primary exit pupil expansion structure a further set of transition beams associated with a further set of transition k-vectors lying in the one of a first domain and a second domain, in which a set of transition k-vectors does not lie, and to diffract the further set of transition beams to form a first tertiary set of guided beams and a second tertiary set of guided beams associated with a first tertiary set of k-vectors and a second tertiary set of k-vectors, respectively, lying in the second domain and in a fourth domain defining a fourth light guiding direction different from each of a first light guiding direction and a second light guiding direction, respectively, and an out-coupling structure may or may not be arranged towards a second light guiding direction from such a tertiary exit pupil expansion structure. Generally, out-coupling structure being arranged towards a second light guiding direction from such a tertiary exit pupil expansion structure may further facilitate coupling light originating from a set of input beams more evenly out of a waveguide and/or facilitate reducing EPE interference.

In the normalized k-vector diagram 2000 of FIG. 2, the diffraction of the further set of transition beams 1050 by the tertiary exit pupil expansion structure 1500 is represented as two instances of a fundamental tertiary exit-pupil-expansion grating k-vector $\left(\mathbf{G}_3^{\mathrm{EPE}}\right)$, one extending from the center of the first domain 2310 to a center of the fourth domain 2340, the other from the center of the fourth domain 2340 to the center of the second domain 2320. As such, the tertiary exit pupil expansion structure 1500 may be configured to diffract the further set of transition beams 1050 by first-order diffraction $\left(\mathbf{G}_3^{\mathrm{EPE}}\right)$ to form the second tertiary set of guided beams 1052 and by second-order diffraction $\left(2\mathbf{G}_3^{\mathrm{EPE}}\right)$ to form the first tertiary set of guided beams 1051. In other embodiments, a tertiary exit pupil expansion structure may or may not be configured in such a manner.

In the embodiment of FIGs. 1 to 3, the tertiary exit pupil expansion structure 1500 comprises a one-dimensional tertiary exit pupil expansion grating 1510 for forming the first tertiary set of guided beams 1051 and a second tertiary set of guided beams 1052. In other embodiments, a tertiary exit pupil expansion structure may comprise any suitable type(s) of tertiary exit pupil expansion grating(s), for example, a one-dimensional tertiary exit pupil expansion grating.

In the embodiment of FIGs. 1 to 3, the set of transition k-vectors 3040 lies in the second domain 2320. Consequently, the secondary exit pupil expansion structure 1400 is arranged towards the second light guiding direction 1002 from the primary exit pupil expansion structure 1300. In other embodiments, a set of transition k-vectors may lie in a first domain or in a second domain. For example, in some embodiments, wherein a set of transition k-vectors lies in a first domain, a display structure may comprise a waveguide, an in-coupling structure, a primary exit pupil expansion structure, a secondary exit pupil expansion structure, and an out-coupling structure corresponding to the waveguide 1100, the in-coupling structure 1200, the primary exit pupil expansion structure 1300, the tertiary exit pupil expansion structure 1500, and the out-coupling structure 1600 of the embodiment of FIGs. 1 to 3, respectively. In such embodiments, the display structure may or may not further comprise a tertiary exit pupil expansion structure corresponding to the secondary exit pupil expansion structure 1400 of the embodiment of FIGs. 1 to 3.

In the embodiment of FIGs. 1 to 3, the in-coupling structure 1200 is configured to couple the set of input beams 1020 into the waveguide 1100 also as a secondary set of in-coupled beams 1022 associated with a secondary set of in-coupled k-vectors 3022 defining the third domain 2330, and the secondary exit pupil expansion structure 1400 is arranged towards the third light guiding direction 1003 from the in-coupling structure 1200.

In the plurality of k-vector diagrams 3000 of FIG. 3, the secondary set of in-coupled beams 1022 is schematically illustrated as a set of points in a ninth k-vector diagram 3900, and the coupling of the set of input beams 1020 into the waveguide 1100 as the secondary set of in-coupled beams 1022 is represented schematically as an arrow extending from the first k-vector diagram 3100 to the ninth k-vector diagram 3900.

According to the invention, the in-coupling structure is configured to couple a set of input beams into a waveguide as a secondary set of in-coupled beams associated with a secondary set of in-coupled k-vectors defining a third domain, and a secondary exit pupil expansion structure may or may not be arranged towards a third light guiding direction from such an in-coupling structure. Generally, an in-coupling structure and a secondary exit pupil expansion structure being configured an arranged in such manner may further facilitate coupling light originating from a set of input beams more evenly out of a waveguide and/or facilitate reducing EPE interference.

In the normalized k-vector diagram 2000 of FIG. 2, the coupling of the set of input beams 1020 into the waveguide 1100 as the set of in-coupled beams 1021 and the secondary set of in-coupled beams 1022 is represented as a fundamental in-coupling grating k-vector ($\mathbf{G}_{\mathrm{IC}}$) extending from a center of the in-coupling domain 2100 to the center of the first domain 2310 and the inverse thereof ($-\mathbf{G}_{\mathrm{IC}}$) extending from the center of the in-coupling domain 2100 to the center of the third domain 2330. As such, the in-coupling structure 1200 is configured to couple the set of input beams 1020 into the waveguide 1100 by first-order diffraction ($\mathbf{G}_{\mathrm{IC}}$, $-\mathbf{G}_{\mathrm{IC}}$) to form the set of in-coupled beams 1021 and the secondary set of in-coupled beams 1022. In other embodiments, an in-coupling structure may or may not be configured to couple a set of input beams into a waveguide by first-order diffraction to form a set of in-coupled beams and, optionally, a secondary set of in-coupled beams.

In the embodiment of FIGs. 1 to 3, the in-coupling structure 1200 comprises a one-dimensional in-coupling grating 1210 for coupling the set of input beams 1020 into the waveguide 1100. Generally, an in-coupling structure comprising a one-dimensional in-coupling grating may facilitate fabricating a display structure and/or increase in-coupling efficiency. In other embodiments, an in-coupling structure may or may not comprise a one-dimensional out-coupling in-coupling grating for coupling a set of input beams into a waveguide. In some embodiments, an in-coupling structure may comprise a two-dimensional in-coupling grating; and/or a reflective optical element, such as a mirror; and/or a refractive optical element, such as a prism, for such purpose in addition or as an alternative to a one-dimensional out-coupling grating.

As depicted in FIG. 1 using dashed lines, the secondary exit pupil expansion structure 1400 may further comprise an auxiliary secondary exit pupil expansion grating 1420 configured to diffract light associated with k-vectors lying in the second domain 2320 towards a fifth light guiding direction 1005 different from each of the first light guiding direction 1001, the second light guiding direction 1002, and the third light guiding direction 1003. Generally, a secondary exit pupil expansion structure comprising such an auxiliary secondary exit pupil expansion grating may further facilitate coupling light originating from a set of input beams more evenly out of a waveguide and/or facilitate reducing EPE interference. In other embodiments, a secondary exit pupil expansion structure may or may not comprise such an auxiliary secondary exit pupil expansion grating.

Any diffractive optical element(s) in the display structure 1000 of the embodiment of FIGs. 1 to 3, for example, the in-coupling grating 1210, the primary exit pupil expansion grating 1310, the secondary exit pupil expansion grating 1410, the auxiliary secondary exit pupil expansion grating 1420, the tertiary exit pupil expansion grating 1510, and/or out-coupling grating 1610, may be formed at least partly using nanoimprint lithography. In other embodiments, any suitable fabrication method(s), for example, nanoimprint lithography and/or electron-beam lithography, may be used.

Due to dispersive properties of typical diffractive optical elements used in waveguide-based display structures, a first set of k-vectors of a first wavelength and a second set of k-vectors of a second wavelength greater than said first wavelength may commonly be diffracted differently to one another. In particular, due to its higher wavelength, such second set of k-vectors is typically diffracted more strongly than such first set of k-vectors. Using k-space formalism, it can be stated that grating k-vectors representing the diffractive properties of typical diffractive optical elements are wavelength-dependent such that magnitudes of said grating k-vectors increase with increased wavelength. Generally, such wavelength-dependence may be accounted for by utilization of in-coupling, exit-pupil-expansion, retardation, and/or out-coupling schemes, wherein the dispersive properties of diffractive optical elements used in such schemes compensate each other such that out-coupled images exhibit reduced dispersion. For example, the display structure 1000 may be configured for multi-color operation in such a manner. In other embodiments, a display structure may or may not be configured for multi-color operation in such a manner. In embodiments, wherein diffractive structures are configured to compensate for dispersion effects, such compensation may occur at two or more visible wavelengths, e.g., at two, three, or four visible wavelengths. Generally, such two or more visible wavelengths may comprise any two or more wavelengths selected in a wavelength range from 300 nm to 750 nm, for example, two or more wavelengths selected from a list consisting of 300 nm, 301 nm, 302 nm, ..., 748 nm, 749 nm, and 750 nm.

The out-coupling structure 1600 of the embodiment of FIGs. 1 to 3 is configured to couple out of the waveguide 1100 sets of optical beams, which are associated with sets of k-vectors lying in the second domain 2320 and received from any of the primary exit pupil expansion structure 1300 (for example, light originating from the first set of guided beams 1031), the secondary exit pupil expansion structure 1400 (for example, light originating from any of the first secondary set of guided beams 1041, the second secondary set of guided beams 1042, and the secondary set of in-coupled beams 1022), and the tertiary exit pupil expansion structure 1500 (for example, light originating from the first tertiary set of guided beams 1051). In other embodiments, an out-coupling structure may be configured to couple out of a waveguide sets of optical beams associated with sets of k-vectors lying in a second domain and received from a secondary exit pupil expansion structure and, optionally, from at least any of a primary exit pupil expansion structure and a tertiary exit pupil expansion structure.

It is to be understood that the embodiments of the first aspect described above may be used in combination with each other. Several of the embodiments may be combined together to form a further embodiment.

Above, mainly features related to display structures are discussed. In the following, more emphasis will lie on aspects related to display devices. What is said above about the ways of implementation, definitions, details, and advantages applies, mutatis mutandis, to the display devices discussed below. The same applies vice versa.

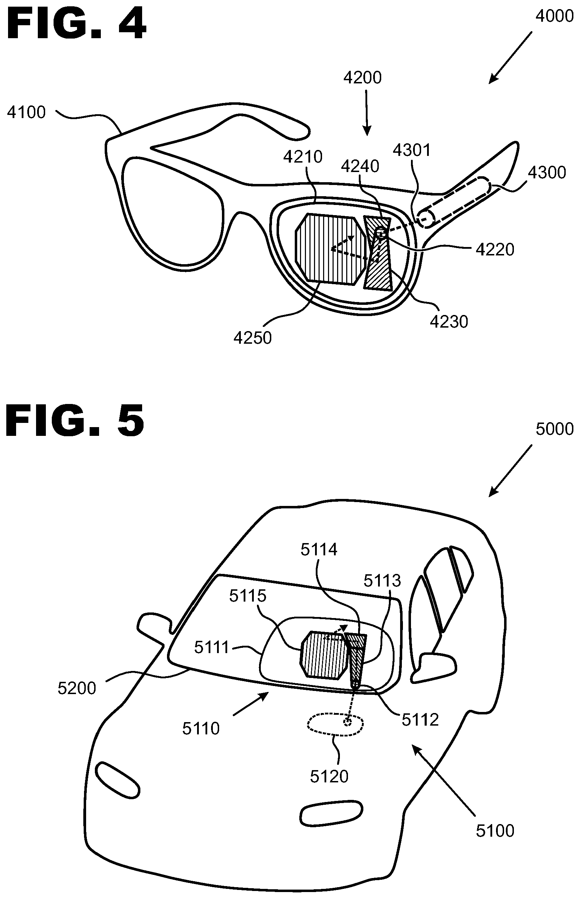

FIG. 4 depicts a display device 4000 according to an embodiment. The embodiment of FIG. 4 is in accordance with any of the embodiments disclosed with reference to or in conjunction with any of FIGs. 1 to 3.

In the embodiment of FIG. 4, the display device 4000 is implemented as a head-mounted see-through display device, more specifically, as spectacles comprising a see-through display. In other embodiments, a display device may be implemented in any suitable manner, for example, as a portable display device and/or as a vehicular display device, which may or may not be further implemented as a see-through display device. In some embodiments, a display device may be implemented specifically as a head-mounted display device.

Herein, a "head-mounted display device" may refer to a portable display device configured to be worn on the head, as part of a piece of headgear, and/or on or over the eyes. Generally, a head-mounted display device may or may not be implemented as a see-through display device and/or as a vehicular display device.

In the embodiment of FIG. 4, the display device 4000 comprises a frame 4100 and a display structure 4200 according to the first aspect supported by the frame 4100. The display structure 4200 comprises a waveguide 4210, an in-coupling structure 4220, a primary exit pupil expansion structure 4230, a secondary exit pupil expansion structure 4240, and an out-coupling structure 4250. In other embodiments, display device may or may not comprise a frame for supporting a display structure.

As shown in FIG. 4, the display device 4000 further comprises an optical engine 4300 configured to direct light 4301 to be coupled into the waveguide 4210 to the in-coupling structure 4220. In other embodiments, a display device may or may not comprise such an optical engine.

FIG. 5 schematically depicts a vehicle 5000 according to an embodiment. In the embodiment of FIG. 5, the vehicle 5000 is implemented as a car. In other embodiments, a vehicle may or may not be implemented as a car. For example, in some embodiments, a vehicle may be implemented as a motor vehicle, such as a car, a truck, a motorcycle, or a bus; a railed vehicle, such as a train or a tram; a piece of heavy machinery, such as a tractor or a harvester; a watercraft, such as a ship or a boat; an aircraft, such as an airplane or a helicopter; or a spacecraft, such as a space capsule or a spaceplane.

In the embodiment of FIG. 5, the vehicle 5000 comprises a vehicular display device 5100 in accordance with the second aspect. Even if not explicitly shown in FIG. 5, the embodiment of FIG. 5 or any part thereof may generally comprise any features and/or elements disclosed with reference to or in conjunction with any of FIGs. 1 to 4.

The vehicular display device 5100 of the embodiment of FIG. 5 comprises a display structure 5110 in accordance with the first aspect and an optical engine 5120. The display structure 5110 comprises a waveguide 5111, an in-coupling structure 5112, a primary exit pupil expansion structure 5113, a secondary exit pupil expansion structure 5114, and an out-coupling structure 5115. In other embodiments, a vehicular display device may or may not comprise an optical engine.

The vehicular display device 5100 of the embodiment of FIG. 5 is implemented as a head-up display device. In other embodiments, a display device may or may not be implemented as a head-up display device.

Herein, a "head-up display device" may refer to a see-through vehicular display device configured to present images and/or data to a steerer, e.g., a driver or a pilot, of a vehicle without requiring said steerer to look away from usual viewpoints thereof. Generally, a head-up display device may or may not be implemented as a vehicle-mounted display device.

In the embodiment of FIG. 5, the vehicle 5000 further comprises a laminated window 5200, and the waveguide 5111 extends within the window 5200. In other embodiments, one or more waveguides may be arranged in any suitable manner (s). In some embodiments, a waveguide may extend within a laminated window, such as a windshield. In some embodiments, a vehicle may comprise a vehicular display device comprising a waveguide arranged at a distance from a window.

It is obvious to a person skilled in the art that with the advancement of technology, the basic idea of the invention may be implemented in numerous ways. The invention and its embodiments are thus not limited to the examples described above, instead they may vary within the scope of the claims.

It will be understood that any benefits and advantages described above may relate to one embodiment or may relate to several embodiments. The embodiments are not limited to those that solve any or all of the stated problems or those that have any or all of the stated benefits and advantages.

The term "comprising" is used in this specification to mean including the feature(s) or act(s) followed thereafter, without excluding the presence of one or more additional features or acts. It will further be understood that reference to 'an' item refers to one or more of those items.

## REFERENCE SIGNS

| | |
|---|---|
| $\mathbf{k} = k\hat{\mathbf{v}}$ | k-vector |
| $\alpha$ | angle |
| $\beta$ | angle |
| $k$ | wavenumber |
| $n$ | refractive index |
| $\hat{\mathbf{v}}$ | unit vector |
| $\mathbf{G}_{IC}$ | in-coupling grating k-vector |
| $\mathbf{G}_1^{EPE}$ | primary exit-pupil-expansion grating k-vector |
| $\mathbf{G}_2^{EPE}$ | secondary exit-pupil-expansion grating k-vector |
| $\mathbf{G}_3^{EPE}$ | tertiary exit-pupil-expansion grating k-vector |

(continued)

| | | | |
|---|---|---|---|
| **G**$_{OC}$ | out-coupling grating k-vector | | |
| 1000 | display structure | 1031 | first set of guided beams |
| 1001 | first light guiding direction | 1032 | second set of guided beams |
| 1002 | second light guiding direction | 1040 | set of transition beams |
| 1003 | third light guiding direction | 1041 | first secondary set of guided beams |
| 1004 | fourth light guiding direction | 1042 | second secondary set of guided beams |
| 1005 | fifth light guiding direction | 1050 | further set of transi-tion beams |
| 1020 | set of input beams | | |
| 1021 | set of in-coupled beams | 1051 | first tertiary set of guided beams |
| 1022 | secondary set of in- coupled beams | 1052 | second tertiary set of guided beams |
| 1060 | set of output beams | 3000 | plurality of k-vector diagrams |
| 1100 | waveguide | | |
| 1200 | in-coupling structure | 3020 | set of input k-vectors |
| 1210 | in-coupling grating | 3021 | set of in-coupled k-vectors |
| 1300 | primary exit pupil ex- pansion structure | 3022 | secondary set of in-coupled k-vectors |
| 1310 | primary exit pupil ex- pansion grating | 3031 | first set of k-vectors |
| 1400 | secondary exit pupil expansion structure | 3032 | second set of k-vec-tors |
| 1410 | secondary exit pupil expansion grating | 3040 | set of transition k-vectors |
| 1420 | auxiliary secondary exit pupil expansion grating | 3041 | first secondary set of k-vectors |
| | | 3042 | second secondary set of k-vectors |
| 1500 | tertiary exit pupil expansion structure | 3050 | further set of transi-tion k-vectors |
| 1510 | tertiary exit pupil expansion grating | 3051 | first tertiary set of k-vectors |
| 1600 | out-coupling structure | | |
| 1610 | out-coupling grating | 3052 | second tertiary set of k-vectors |
| 2000 | k-vector diagram | | |
| 2001 | guided propagation do- main | 3060 | set of output k-vec-tors |
| 2002 | coupling domain | 3100 | first k-vector diagram |
| 2100 | in-coupling domain | 3200 | second k-vector dia-gram |
| 2200 | out-coupling domain | | |
| 2310 | first domain | 3300 | third k-vector diagram |
| 2320 | second domain | 3400 | fourth k-vector dia-gram |
| 2330 | third domain | | |
| 2340 | fourth domain | 3500 | fifth k-vector diagram |
| | | 3600 | sixth k-vector diagram |
| 3700 | seventh k-vector dia- gram | 4301 | light |
| | | 5000 | vehicle |
| 3800 | eight k-vector diagram | 5100 | vehicular display de-vice |
| 3900 | ninth k-vector diagram | | |
| 4000 | display device | 5110 | display structure |
| 4100 | frame | 5111 | waveguide |
| 4200 | display structure | 5112 | in-coupling structure |
| 4210 | waveguide | 5113 | primary exit pupil ex-pansion structure |
| 4220 | in-coupling structure | | |
| 4230 | primary exit pupil ex- pansion structure | 5114 | secondary exit pupil expansion structure |
| 4240 | secondary exit pupil expansion structure | 5115 | out-coupling structure |
| | | 5120 | optical engine |
| 4250 | out-coupling structure | 5200 | window |
| 4300 | optical engine | | |

**Claims**

1. A display structure (1000), comprising:

   - a waveguide (1100);
   - an in-coupling structure (1200) configured to couple a set of input beams (1020) into the waveguide (1100) as a set of in-coupled beams (1021) associated with a set of in-coupled k-vectors (3021) defining a first domain (2310) in k-space in an annular guided propagation domain (2001) associated with the waveguide (1100), the first domain (2310) defining a first light guiding direction (1001); and
   - a diffractive primary exit pupil expansion structure (1300) configured to receive the set of in-coupled beams (1021) and to diffract the set of in-coupled beams (1021) to form a first set of guided beams (1031) and a second set of guided beams (1032) associated with a first set of k-vectors (3031) and a second set of k-vectors (3032), respectively, lying in the first domain (2310) and in a second domain (2320) defining a second light guiding direction (1002) different from the first light guiding direction (1001);
   wherein the display structure (1000) further comprises:

      - a diffractive secondary exit pupil expansion structure (1400) configured to receive from the primary exit pupil expansion structure (1300) a set of transition beams (1040) associated with a set of transition k-vectors (3040) lying in one of the first domain (2310) and the second domain (2320) and to diffract the set of transition beams (1040) to form a first secondary set of guided beams (1041) and a second secondary set of guided beams (1042) associated with a first secondary set of k-vectors (3041) and a second secondary set of k-vectors (3042), respectively, lying in the second domain (2320) and in a third domain (2330) defining a third light guiding direction (1003) different from each of the first light guiding direction (1001) and the second light guiding direction (1002), respectively; and
      - an out-coupling structure (1600) arranged towards the second light guiding direction (1002) from the primary exit pupil expansion structure (1300) and from the secondary exit pupil expansion structure (1400) and configured to couple light associated with k-vectors lying in the second domain (2320) out of the waveguide (1100);

   wherein the in-coupling structure (1200) is configured to couple the set of input beams (1020) into the waveguide (1100) as a secondary set of in-coupled beams (1022) associated with an secondary set of in-coupled k-vectors (3022) defining the third domain (2330), and the secondary exit pupil expansion structure (1400) is arranged towards the third light guiding direction (1003) from the in-coupling structure (1200).

2. A display structure (1000) according to claim 1, wherein the secondary exit pupil expansion structure (1400) is arranged such that light guided from the secondary exit pupil expansion structure (1400) towards either of the second light guiding direction (1002) and the third light guiding direction (1003) propagates past the primary exit pupil expansion structure (1300).

3. A display structure (1000) according to claim 1 or claim 2, wherein a smallest angle, $\alpha$, between the first light guiding direction (1001) and the second light guiding direction (1002) is greater than or equal to 55°, or to 65°, or to 75°, or to 85° and/or less than or equal to 95°, or to 105°, or to 115°, or to 125°.

4. A display structure (1000) according to any of the preceding claims, wherein a smallest angle, $\beta$, between the first light guiding direction (1001) and the third light guiding direction (1003) is greater than or equal to 155°, or to 165°, or to 175°.

5. A display structure (1000) according to any of the preceding claims, wherein the primary exit pupil expansion structure (1300) comprises a one-dimensional primary exit pupil expansion grating (1310) for forming the first set of guided beams (1031) and the second set of guided beams (1032), and/or the secondary exit pupil expansion structure (1400) comprises a one-dimensional secondary exit pupil expansion grating (1410) for forming the first secondary set of guided beams (1041) and the second secondary set of guided beams (1042).

6. A display structure (1000) according to any of the preceding claims, wherein the out-coupling structure (1600) comprises a one-dimensional out-coupling grating (1610) for coupling light from the first secondary set of guided beams (1041) out of the waveguide (1100).

7. A display structure (1000) according to any of the preceding claims, wherein the display structure (1000) comprises a

# EP 4 526 722 B1

diffractive tertiary exit pupil expansion structure (1500) configured to receive from the primary exit pupil expansion structure (1300) a further set of transition beams (1050) associated with a further set of transition k-vectors (3050) lying in the other of the first domain (2310) and the second domain (2320) and to diffract the further set of transition beams (1050) to form a first tertiary set of guided beams (1051) and a second tertiary set of guided beams (1052) associated with a first tertiary set of k-vectors (3051) and a second tertiary set of k-vectors (3052), respectively, lying in the second domain (2320) and in a fourth domain (2340) defining a fourth light guiding direction (1004) different from each of the first light guiding direction (1001) and the second light guiding direction (1002), respectively, and the out-coupling structure (1600) is arranged towards the second light guiding direction (1002) from the tertiary exit pupil expansion structure (1500).

8. A display structure (1000) according to any of the preceding claims, wherein the secondary exit pupil expansion structure (1400) comprises an auxiliary secondary exit pupil expansion grating (1420) configured to diffract light associated with k-vectors lying in the second domain (2320) towards a fifth light guiding direction (1005) different from each of the first light guiding direction (1001), the second light guiding direction (1002), and the third light guiding direction (1003).

9. A display device (4000) comprising a display structure (4200) in accordance with any of claims 1 to 8.

10. A display device (4000) according to claim 9 implemented as a see-through display device.

11. A display device (4000) according to claim 9 or 10 implemented as a portable display device.

12. A display device (4000) according to any of claims 9 to 11 implemented as a vehicular display device.

13. A vehicle (5000) comprising a vehicular display device (5100) in accordance with claim 12.

**Patentansprüche**

1. Anzeigestruktur (1000), umfassend:

- einen Wellenleiter (1100);
- eine Einkopplungsstruktur (1200), die dazu konfiguriert ist, einen Satz von Eingangsstrahlen (1020) als einen Satz von eingekoppelten Strahlen (1021), die einem Satz von eingekoppelten k-Vektoren (3021) zugeordnet sind, die eine erste Domäne (2310) im k-Raum in einer ringförmigen geführten Ausbreitungsdomäne (2001) definieren, die dem Wellenleiter (1100) zugeordnet ist, in den Wellenleiter (1100) einzukoppeln, wobei die erste Domäne (2310) eine erste Lichtleitrichtung (1001) definiert; und
- eine diffraktive primäre Austrittspupillen-Erweiterungsstruktur (1300), die dazu konfiguriert ist, den Satz eingekoppelter Strahlen (1021) zu empfangen und den Satz eingekoppelter Strahlen (1021) zu beugen, um einen ersten Satz geführter Strahlen (1031) und einen zweiten Satz geführter Strahlen (1032) zu bilden, die jeweils einem ersten Satz von k-Vektoren (3031) und einem zweiten Satz von k-Vektoren (3032) zugeordnet sind, die in der ersten Domäne (2310) und in einer zweiten Domäne (2320) liegen, die eine zweite Lichtleitrichtung (1002) definiert, die sich von der ersten Lichtleitrichtung (1001) unterscheidet; wobei die Anzeigestruktur (1000) ferner umfasst:

- eine diffraktive sekundäre Austrittspupillen-Erweiterungsstruktur (1400), die dazu konfiguriert ist, von der primären Austrittspupillen-Erweiterungsstruktur (1300) einen Satz von Übergangsstrahlen (1040) zu empfangen, die einem Satz von Übergangs-k-Vektoren (3040) zugeordnet sind, die in einer von der ersten Domäne (2310) und der zweiten Domäne (2320) liegen, und den Satz von Übergangsstrahlen (1040) zu beugen, um einen ersten sekundären Satz von geführten Strahlen (1041) und einen zweiten sekundären Satz von geführten Strahlen (1042) zu bilden, die jeweils einem ersten sekundären Satz von k-Vektoren (3041) und einem zweiten sekundären Satz von k-Vektoren (3042) zugeordnet sind, die in der zweiten Domäne (2320) und in einer dritten Domäne (2330) liegen, die eine dritte Lichtleitrichtung (1003) definiert, die sich jeweils von der ersten Lichtleitrichtung (1001) und der zweiten Lichtleitrichtung (1002) unterscheidet; und
- eine Auskopplungsstruktur (1600), die in Richtung der zweiten Lichtleitrichtung (1002) von der primären Austrittspupillen-Erweiterungsstruktur (1300) und von der sekundären Austrittspupillen-Erweiterungsstruktur (1400) angeordnet und dazu konfiguriert ist, Licht, das k-Vektoren zugeordnet ist, die in der zweiten Domäne (2320) liegen, aus dem Wellenleiter (1100) auszukoppeln;

wobei die Einkopplungsstruktur (1200) dazu konfiguriert ist, den Satz von Eingangsstrahlen (1020) als einen sekundären Satz von eingekoppelten Strahlen (1022), die einem sekundären Satz von eingekoppelten k-Vektoren (3022) zugeordnet sind, die die dritte Domäne (2330) definieren, in den Wellenleiter (1100) einzukoppeln, und die sekundäre Austrittspupillen-Erweiterungsstruktur (1400) in Richtung der dritten Lichtleitrichtung (1003) von der Einkopplungsstruktur (1200) angeordnet ist.

2. Anzeigestruktur (1000) nach Anspruch 1, wobei die sekundäre Austrittspupillen-Erweiterungsstruktur (1400) derart angeordnet ist, dass sich Licht, das von der sekundären Austrittspupillen-Erweiterungsstruktur (1400) in Richtung der zweiten Lichtleitrichtung (1002) oder der dritten Lichtleitrichtung (1003) geleitet wird, über die primäre Austrittspupillen-Erweiterungsstruktur (1300) hinaus ausbreitet.

3. Anzeigestruktur (1000) nach Anspruch 1 oder Anspruch 2, wobei ein kleinster Winkel $\alpha$ zwischen der ersten Lichtleitrichtung (1001) und der zweiten Lichtleitrichtung (1002) größer oder gleich 55° oder 65° oder 75° oder 85° und/oder kleiner oder gleich 95° oder 105° oder 115° oder 125° ist.

4. Anzeigestruktur (1000) nach einem der vorhergehenden Ansprüche, wobei ein kleinster Winkel $\beta$ zwischen der ersten Lichtleitrichtung (1001) und der dritten Lichtleitrichtung (1003) größer oder gleich 155° oder 165° oder 175° ist.

5. Anzeigestruktur (1000) nach einem der vorhergehenden Ansprüche, wobei die primäre Austrittspupillen-Erweiterungsstruktur (1300) ein eindimensionales primäres Austrittspupillen-Erweiterungsgitter (1310) zum Bilden des ersten Satzes geführter Strahlen (1031) und des zweiten Satzes geführter Strahlen (1032) umfasst, und/oder die sekundäre Austrittspupillen-Erweiterungsstruktur (1400) ein eindimensionales sekundäres Austrittspupillen-Erweiterungsgitter (1410) zum Bilden des ersten sekundären Satzes geführter Strahlen (1041) und des zweiten sekundären Satzes geführter Strahlen (1042) umfasst.

6. Anzeigestruktur (1000) nach einem der vorhergehenden Ansprüche, wobei die Auskopplungsstruktur (1600) ein eindimensionales Auskopplungsgitter (1610) zum Auskoppeln von Licht aus dem ersten sekundären Satz geführter Strahlen (1041) aus dem Wellenleiter (1100) umfasst.

7. Anzeigestruktur (1000) nach einem der vorhergehenden Ansprüche, wobei die Anzeigestruktur (1000) eine diffraktive tertiäre Austrittspupillen-Erweiterungsstruktur (1500) umfasst, die dazu konfiguriert ist, von der primären Austrittspupillen-Erweiterungsstruktur (1300) einen weiteren Satz von Übergangsstrahlen (1050) zu empfangen, die einem weiteren Satz von Übergangs-k-Vektoren (3050) zugeordnet sind, die in der anderen von der ersten Domäne (2310) und der zweiten Domäne (2320) liegen, und den weiteren Satz von Übergangsstrahlen (1050) zu beugen, um einen ersten tertiären Satz von geführten Strahlen (1051) und einen zweiten tertiären Satz von geführten Strahlen (1052) zu bilden, die jeweils einem ersten tertiären Satz von k-Vektoren (3051) und einem zweiten tertiären Satz von k-Vektoren (3052) zugeordnet sind, die in der zweiten Domäne (2320) und in einer vierten Domäne (2340) liegen, die eine vierte Lichtleitrichtung (1004) definiert, die sich jeweils von der ersten Lichtleitrichtung (1001) und der zweiten Lichtleitrichtung (1002) unterscheidet; und die Auskopplungsstruktur (1600) in Richtung der zweiten Lichtleitrichtung (1002) von der tertiären Austrittspupillen-Erweiterungsstruktur (1500) angeordnet ist.

8. Anzeigestruktur (1000) nach einem der vorhergehenden Ansprüche, wobei die sekundäre Austrittspupillen-Erweiterungsstruktur (1400) ein sekundäres Hilfs-Austrittspupillen-Erweiterungsgitter (1420) umfasst, das dazu konfiguriert ist, Licht, das k-Vektoren zugeordnet ist, die in der zweiten Domäne (2320) liegen, in Richtung einer fünften Lichtleitrichtung (1005) zu beugen, die sich von der ersten Lichtleitrichtung (1001), der zweiten Lichtleitrichtung (1002) und der dritten Lichtleitrichtung (1003) unterscheidet.

9. Anzeigevorrichtung (4000), die eine Anzeigestruktur (4200) nach einem der Ansprüche 1 bis 8 umfasst.

10. Anzeigevorrichtung (4000) nach Anspruch 9, die als durchsichtige Anzeigevorrichtung ausgeführt ist.

11. Anzeigevorrichtung (4000) nach Anspruch 9 oder 10, die als tragbare Anzeigevorrichtung ausgeführt ist.

12. Anzeigevorrichtung (4000) nach einem der Ansprüche 9 bis 11, die als Fahrzeuganzeigevorrichtung ausgeführt ist.

13. Fahrzeug (5000), das eine Fahrzeuganzeigevorrichtung (5100) nach Anspruch 12 umfasst.

**Revendications**

1. Structure d'affichage (1000), comprenant :

   - un guide d'ondes (1100) ;
   - une structure de couplage d'entrée (1200) configurée pour coupler un ensemble de faisceaux d'entrée (1020) dans le guide d'ondes (1100) sous la forme d'un ensemble de faisceaux d'entrée couplés (1021) associés à un ensemble de vecteurs k d'entrée couplés (3021) définissant un premier domaine (2310) dans l'espace k dans un domaine de propagation guidé annulaire (2001) associé au guide d'ondes (1100), le premier domaine (2310) définissant une première direction de guidage de lumière (1001) ; et
   - une structure primaire diffractive d'expansion de pupille de sortie (1300) configurée pour recevoir l'ensemble de faisceaux d'entrée couplés (1021) et pour diffracter l'ensemble de faisceaux d'entrée couplés (1021) pour former un premier ensemble de faisceaux guidés (1031) et un deuxième ensemble de faisceaux guidés (1032) associés à un premier ensemble de vecteurs k (3031) et un deuxième ensemble de vecteurs k (3032), respectivement, situés dans le premier domaine (2310) et dans un deuxième domaine (2320) définissant une deuxième direction de guidage de lumière (1002) différente de la première direction de guidage de lumière (1001) ;
   dans laquelle la structure d'affichage (1000) comprend en outre :

   - une structure secondaire diffractive d'expansion de pupille de sortie (1400) configurée pour recevoir de la structure primaire d'expansion de pupille de sortie (1300) un ensemble de faisceaux de transition (1040) associés à un ensemble de vecteurs k de transition (3040) situés dans l'un entre le premier domaine (2310) et le deuxième domaine (2320) et pour diffracter l'ensemble de faisceaux de transition (1040) pour former un premier ensemble secondaire de faisceaux guidés (1041) et un deuxième ensemble secondaire de faisceaux guidés (1042) associés à un premier ensemble secondaire de vecteurs k (3041) et un deuxième ensemble secondaire de vecteurs k (3042), respectivement, situés dans le deuxième domaine (2320) et dans un troisième domaine (2330) définissant une troisième direction de guidage de lumière (1003) différente de chacune de la première direction de guidage de lumière (1001) et de la deuxième direction de guidage de lumière (1002), respectivement ; et
   - une structure de couplage de sortie (1600) disposée vers la deuxième direction de guidage de lumière (1002) à partir de la structure primaire d'expansion de pupille de sortie (1300) et de la structure secondaire d'expansion de pupille de sortie (1400) et configurée pour coupler la lumière associée aux vecteurs k se trouvant dans le deuxième domaine (2320) hors du guide d'ondes (1100) ;

   dans laquelle la structure de couplage d'entrée (1200) est configurée pour coupler l'ensemble de faisceaux d'entrée (1020) dans le guide d'ondes (1100) en tant qu'ensemble secondaire de faisceaux d'entrée couplés (1022) associé à un ensemble secondaire de vecteurs k d'entrée couplés (3022) définissant le troisième domaine (2330), et la structure secondaire d'expansion de pupille de sortie (1400) est disposée vers la troisième direction de guidage de lumière (1003) à partir de la structure de couplage d'entrée (1200).

2. Structure d'affichage (1000) selon la revendication 1, dans laquelle la structure secondaire d'expansion de pupille de sortie (1400) est disposée de telle sorte que la lumière guidée depuis la structure secondaire d'expansion de pupille de sortie (1400) vers l'une ou l'autre de la deuxième direction de guidage de lumière (1002) et de la troisième direction de guidage de lumière (1003) se propage au-delà de la structure primaire d'expansion de pupille de sortie (1300).

3. Structure d'affichage (1000) selon la revendication 1 ou la revendication 2, dans laquelle un angle le plus petit, $\alpha$, entre la première direction de guidage de lumière (1001) et la deuxième direction de guidage de lumière (1002) est supérieur ou égal à 55 °, ou à 65 °, ou à 75 °, ou à 85 ° et/ou inférieur ou égal à 95 °, ou à 105 °, ou à 115 °, ou à 125 °.

4. Structure d'affichage (1000) selon l'une quelconque des revendications précédentes, dans laquelle un angle le plus petit, $\beta$, entre la première direction de guidage de lumière (1001) et la troisième direction de guidage de lumière (1003) est supérieur ou égal à 155 °, ou à 165 °, ou à 175 °.

5. Structure d'affichage (1000) selon l'une quelconque des revendications précédentes, dans laquelle la structure primaire d'expansion de pupille de sortie (1300) comprend un réseau d'expansion de pupille de sortie primaire unidimensionnel (1310) pour former le premier ensemble de faisceaux guidés (1031) et le deuxième ensemble de faisceaux guidés (1032), et/ou la structure secondaire d'expansion de pupille de sortie (1400) comprend un réseau d'expansion de pupille de sortie secondaire unidimensionnel (1410) pour former le premier ensemble secondaire de faisceaux guidés (1041) et le deuxième ensemble secondaire de faisceaux guidés (1042).

6. Structure d'affichage (1000) selon l'une quelconque des revendications précédentes, dans laquelle la structure de couplage de sortie (1600) comprend un réseau de couplage de sortie unidimensionnel (1610) pour coupler la lumière provenant du premier ensemble secondaire de faisceaux guidés (1041) hors du guide d'ondes (1100).

7. Structure d'affichage (1000) selon l'une quelconque des revendications précédentes, dans laquelle la structure d'affichage (1000) comprend une structure d'expansion de pupille de sortie tertiaire diffractive (1500) configurée pour recevoir de la structure primaire d'expansion de pupille de sortie (1300) un autre ensemble de faisceaux de transition (1050) associés à un autre ensemble de vecteurs k de transition (3050) situés dans l'autre du premier domaine (2310) et du deuxième domaine (2320) et pour diffracter l'autre ensemble de faisceaux de transition (1050) pour former un premier ensemble tertiaire de faisceaux guidés (1051) et un deuxième ensemble tertiaire de faisceaux guidés (1052) associés à un premier ensemble tertiaire de vecteurs k (3051) et à un deuxième ensemble tertiaire de vecteurs k (3052), respectivement, situés dans le deuxième domaine (2320) et dans un quatrième domaine (2340) définissant une quatrième direction de guidage de la lumière (1004) différente de chacune de la première direction de guidage de la lumière (1001) et la deuxième direction de guidage de la lumière (1002), respectivement, et la structure de couplage de sortie (1600) est disposée vers la deuxième direction de guidage de la lumière (1002) à partir de la structure d'expansion de pupille de sortie tertiaire (1500).

8. Structure d'affichage (1000) selon l'une quelconque des revendications précédentes, dans laquelle la structure secondaire d'expansion de pupille de sortie (1400) comprend un réseau d'expansion de pupille de sortie secondaire auxiliaire (1420) configuré pour diffracter la lumière associée à des vecteurs k situés dans le deuxième domaine (2320) vers une cinquième direction de guidage de lumière (1005) différente de chacune de la première direction de guidage de lumière (1001), de la deuxième direction de guidage de lumière (1002) et de la troisième direction de guidage de lumière (1003).

9. Dispositif d'affichage (4000) comprenant une structure d'affichage (4200) selon l'une quelconque des revendications 1 à 8.

10. Dispositif d'affichage (4000) selon la revendication 9, mis en œuvre en tant que dispositif d'affichage transparent.

11. Dispositif d'affichage (4000) selon la revendication 9 ou 10, mis en œuvre en tant que dispositif d'affichage portable.

12. Dispositif d'affichage (4000) selon l'une quelconque des revendications 9 à 11, mis en œuvre en tant que dispositif d'affichage de véhicule.

13. Véhicule (5000) comprenant un dispositif d'affichage de véhicule (5100) selon la revendication 12.

# FIG. 1

# FIG. 2

FIG. 3

3000

EP 4 526 722 B1

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021144452 A1